(19)

**Europäisches Patentamt**
**European Patent Office**
**Office européen des brevets**

(11) **EP 3 836 381 A1**

(12) **EUROPEAN PATENT APPLICATION**

(43) Date of publication:
**16.06.2021 Bulletin 2021/24**

(21) Application number: **19215411.0**

(22) Date of filing: **11.12.2019**

(51) Int Cl.:
*H02M 7/487* (2007.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **ABB Schweiz AG**
**5400 Baden (CH)**

(72) Inventors:
• **SCHNEEBERGER, Michael**
**8006 Zürich (CH)**
• **HAEDERLI, Christoph**
**8947 Zürich (CH)**

(74) Representative: **Kransell & Wennborg KB**
**P.O. Box 27834**
**115 93 Stockholm (SE)**

(54) **CONTROL OF NPC CONVERTER USING VOLTAGE HARMONIC INJECTION**

(57)    The present disclosure relates to a method of controlling Neutral Point (NP) voltage of a power converter having a three-level DC link arrangement. The method comprises obtaining a measured system property (55). The method also comprises, based on the obtained system property, applying Neutral Point Balancing (NPB) comprising a Voltage Harmonic Injection (VHI) control method (52) for injecting at least one voltage harmonic component to an output voltage of the power converter to control the NP voltage towards a reference NP voltage.

Fig. 8

EP 3 836 381 A1

**Description**

**TECHNICAL FIELD**

The present disclosure relates to a method and controller for controlling the Neutral Point (NP) voltage of a three-phase (3p) Neutral Point Clamped (NPC) power inverter/converter having a three-level (3L) Direct Current (DC) link.

**BACKGROUND**

A 3p NPC inverter is a Voltage Source Converter (VSC) having two DC links connected to the NP, where each DC link should have the same absolute voltage (u) as the other DC link during operation. The NP voltage can be defined as the difference between the positive (pos) and negative (neg) DC-link voltages:

$$u_{NP} = u_{DC,pos} - u_{DC,neg} \tag{1}$$

The neutral-point balancing (NPB) describes the control mechanism to keep $u_{NP}$ at 0 V. A large deviation from 0 V would otherwise lead to bad performance or malfunctioning of the converter.
An indirect NPB does not directly control the switching of the power switches of the converter but acts on the input of a modulator by passing through some intermediate logic. The intermediate logic generates the modulation signals depending on the main control output and the kind of modulator that is used.
Common ways of controlling the NP voltage $u_{NP}$ include DC Common Mode (CM) voltage injection to the AC output voltage, an alternate switching state method choosing between converter states with equivalent output voltage but different NP current, and limiting the voltage of each DC-link by means of a voltage limiting unit (similar to a break chopper).
In DC CM voltage injection, an offset is added to each output voltage, resulting in conduction of more current to either DC-link over the course of a period depending on the offset voltage sign. This method is widely applied and works best with active power operation (small load angle phi).
The alternate switching state method can be difficult to control due to its discrete behaviour and tends to generate increased switching losses in the converter.
The method of limiting the voltage of each DC-link by means of a voltage limiting unit can avoid large deviations but does not provide a balanced steady state and generates significant losses if the source of NP unbalance persists.

**SUMMARY**

It is an objective of the present invention to provide an improved control method, especially for reactive power operation where DC CM voltage injection is less preferred.
According to an aspect of the present invention, there is provided a method of controlling Neutral Point (NP) voltage of a power converter having a three-level DC link arrangement. The method comprises obtaining a measured system property. The method also comprises, based on the obtained system property, applying Neutral Point Balancing (NPB) comprising a Voltage Harmonic Injection (VHI) control method for injecting at least one voltage harmonic component to an output voltage of the power converter to control the NP voltage towards a reference NP voltage.
According to another aspect of the present invention, there is provided a computer program product comprising computer-executable components for causing a converter controller to perform the method of any preceding claim when the computer-executable components are run on processing circuitry comprised in the converter controller.
According to another aspect of the present invention, there is provided a controller for controlling NP voltage of a three-phase power converter having a three-level DC link arrangement. The controller comprises processing circuitry, and data storage storing instructions executable by said processing circuitry whereby said controller is operative to obtain a measured system property, and based on the obtained system property, apply NPB comprising a VHI control method for injecting at least one voltage harmonic component to an output voltage of the power converter to control the NP voltage towards a reference NP voltage.
It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.
Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

## BRIEF DESCRIPTION OF THE DRAWINGS

Embodiments will be described, by way of example, with reference to the accompanying drawings, in which:

Fig 1 is a schematic circuit diagram of an NPC converter arrangement, in accordance with an embodiment of the present invention.

Fig 2 is a schematic flow chart illustrating indirect NPB, in accordance with an embodiment of the present invention.

Fig 3 schematically illustrates switching states of a 3L NPC converter in the $\alpha\beta$-plane, in accordance with an embodiment of the present invention.

Fig 4 schematically illustrates how the 3p lines are connected to the DC links during switching state oPN, in accordance with an embodiment of the present invention.

Fig 5 is a schematic flow chart illustrating a combination of NPB methods, in accordance with an embodiment of the present invention.

Fig 6 is a schematic circuit diagram of a converter arrangement comprising two NPC converters in accordance with some embodiments of the present invention, connected back-to-back between two 3p grids.

Fig 7 is a schematic circuit diagram of series connection of transformer primaries in a 12-pulse transformer topology, describing two 3p transformers and the connection between them, with two NPC converter structures, in accordance with an embodiment of the present invention.

Fig 8 is a schematic flow chart illustrating an example combination of NPB methods, in accordance with an embodiment of the present invention.

Fig 9 is a schematic functional diagram illustrating DC CM voltage injection.

Fig 10 is a schematic functional diagram illustrating voltage harmonic injection, in accordance with an embodiment of the present invention.

Fig 11 is a schematic functional diagram illustrating implementation of harmonic generator, in accordance with an embodiment of the present invention.

Fig 12 is a schematic graph illustrating an output of the harmonic generator e.g. of figure 11.

Fig 13 is a schematic graph illustrating modulation with voltage harmonic injection in the $\alpha\beta$-plane, in accordance with an embodiment of the present invention.

Fig 14 is a schematic functional diagram illustrating output of a weighted sum, in accordance with an embodiment of the present invention.

Fig 15 is a schematic flow chart illustrating logic of a method of switching between different NPB methods, in accordance with an embodiment of the present invention.

Fig 16 is a schematic diagram illustrating NPB selection in the active (P) -reactive (Q) power plane, in accordance with an embodiment of the present invention.

Fig 17 is a schematic flow chart illustrating embodiments of a method of the present invention.

**DETAILED DESCRIPTION**

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

The invention is herein discussed with reference to a Neutral Point Clamped (NPC) converter topology. However, embodiments of the invention may be used with and type of converter with a 3L DC link (typically having two series connected capacitor arrangements). A 3L DC link is obtained by an NPC (using clamping diodes to make the connection to the Neutral Point), but it can also be obtained in other ways. Examples include Neutral Point Piloted (NPP) converter (also known as a T type NPC converter), modular Nested Neutral Point Piloted (NNPP) converter (also known as stacked multicell converter), and Active Neutral Point Clamped (ANPC) converter.

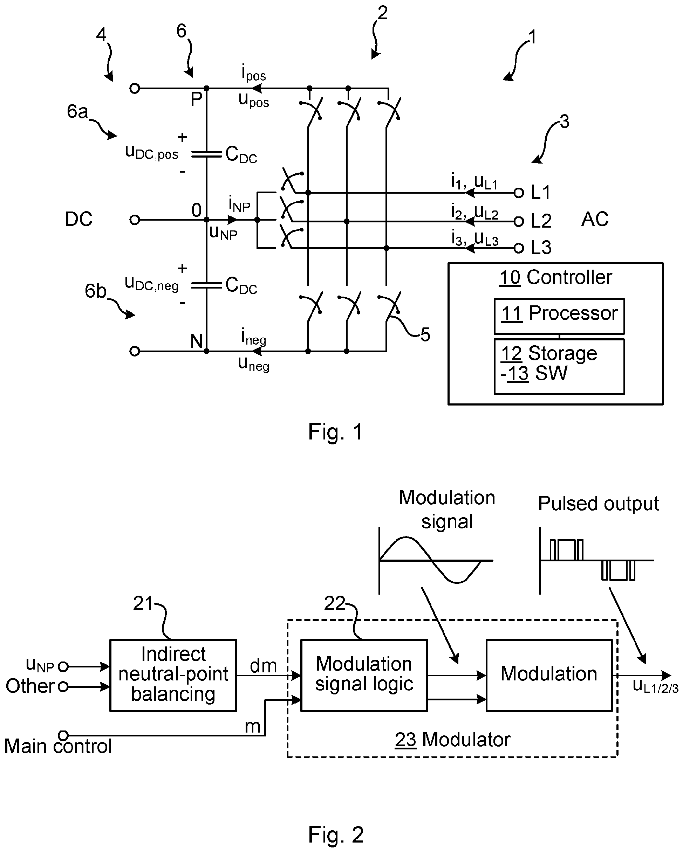

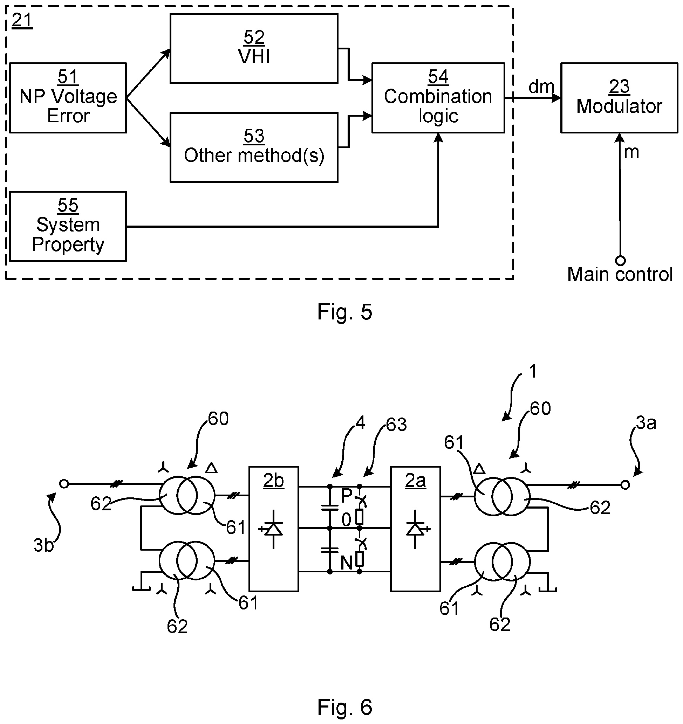

Figure 1 illustrates an NPC converter arrangement 1 comprising an NPC converter, e.g. inverter, 2 connected between an Alternating Current (AC) grid 3 and a DC side 4, which DC side 4 may e.g. be connected to a DC power source such as a battery or renewable energy source (such as wind or solar) or to back-to-back to another power converter (e.g. as in figure 6).

The DC side 4 of the NPC converter 2 comprises a DC link arrangement 6, comprising a positive DC link 6a connected between a positive point P on the positive DC line and the NP o on the neutral DC line, and a negative DC link 6b connected between a negative point N on the negative DC line and the NP o on the neutral DC line. Each of the DC links 6a and 6b is conventionally provided with an electronics component which allows a voltage to be formed between the NP o and the positive and negative points P and N, respectively, e.g. comprising a capacitor (as in the figure) and/or a diode. Thus a positive DC voltage $u_{DC,pos}$ is formed over the positive DC link 6a and a negative DC voltage $u_{DC,neg}$ is formed over the negative DC link 6b.

A plurality of semiconductor switches 5 are arranged to allow either of the lines L1, L2 and L3 of the 3p AC grid 3 to connect to either of the positive P, negative N or neutral 0 points of the DC link arrangement 6.

A controller 10 of the NPC converter arrangement 1, provided with processing circuitry and executable instructions for controlling the NPC converter arrangement 1 (especially the switching of the switches 5), is schematically shown in the figure. The controller may be configured to control the NPC converter 2 in accordance with the method of the present disclosure.

The controller 10 comprises processing circuitry 11 e.g. a central processing unit (CPU). The processing circuitry 11 may comprise one or a plurality of processing units in the form of microprocessor(s). However, other suitable devices with computing capabilities could be comprised in the processing circuitry 11, e.g. an application specific integrated circuit (ASIC), a field programmable gate array (FPGA) or a complex programmable logic device (CPLD). The processing circuitry 11 is configured to run one or several computer program(s) or software (SW) 13 stored in a data storage 12 of one or several storage unit(s) e.g. a memory. The storage unit 12 is regarded as a computer readable means, forming a computer program product together with the SW 13 stored thereon as computer-executable components, as discussed herein and may e.g. be in the form of a Random Access Memory (RAM), a Flash memory or other solid state memory, or a hard disk, or be a combination thereof. The processing circuitry 11 may also be configured to store data in the storage 12, as needed.

As illustrated in figure 2, an indirect NPB 21 does not directly control the switching of the semiconductor switches 5, but acts on the input to a modulator 23 by passing through some intermediate logic 22 of said modulator 23. The output signal of the indirect NPB is called "dm" and represents a correction signal for each phase Li, L2, L3. dm could also be for example called "$corr_{NP}$". For PWM, $corr_{NP}$ could be used to offset the modulation signal, and for Optimized Pulse Pattern (OPP), $corr_{NP}$ could be used to increase or decrease the modulation amplitude (this transformation may be done by the modulation signal logic 22). The intermediate logic 22 generates the modulation signals depending on the main control output called main control output "m" (called modulation index) and the kind of modulation 24 that is used. The modulator 23 typically generates a pulsed output in order to generate the output voltages $u_{L1}$, $u_{L2}$, $u_{L3}$ of the converter 2. The harmonic component injected by the indirect NPB 21 may be observed on the modulation signal and has to exists in the corresponding output voltage $u_{L1}$, $u_{L2}$ or $u_{L3}$. The modulator 23 may e.g. be configured for a Pulse-Width Modulation (PWM) method, e.g. carrier-based PWM, pre-determined switching patterns, or a space vector modulation method. The type of modulation method used may also be used as input for the modulation signal logic 22.

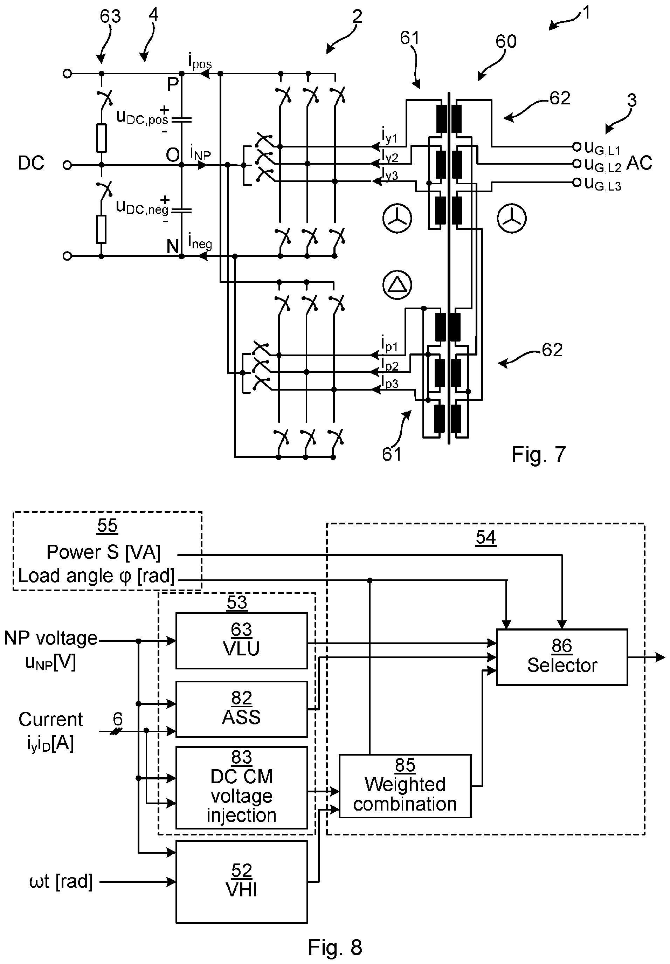

One way of controlling the NP voltage $u_{NP}$ is by slightly modifying the application time of a switching state of the switches 5 or by introducing a switching state that is normally not used, e.g. by means of an alternate switching state (ASS) method. The resulting effect depends then on the line current at the time the switching state is modified. Depending on the load angle phi ($\varphi$), some switching states have therefore a higher effect on the NP voltage than other switching states. The load angle is the angle between active power and the apparent power vector and implies when the current reaches its maximum relative to the voltage waveform. The current on the AC side determines how much current can possibly flow into the NP. The load angle may ideally be measured on the output voltages $u_{L1}$, $u_{L2}$, $u_{L3}$ between the converter 2 and a transformer, but a corresponding load angle may also be obtained from the grid voltages $u_{G,L1}$, $u_{G,L2}$, $u_{G,L3}$ representing the voltages on the transformer primary side (cf. figure 7).

The angle at which the voltage harmonic component is to be injected may be determined based on the obtained load angle $\varphi$, which determines the amount of the NP current $i_{NP}$ flowing into the DC link 6. The rather complex mathematical relationship between the angles may involve a folding function and rectification, and it may thus be non-linear at least in parts of the operating range.

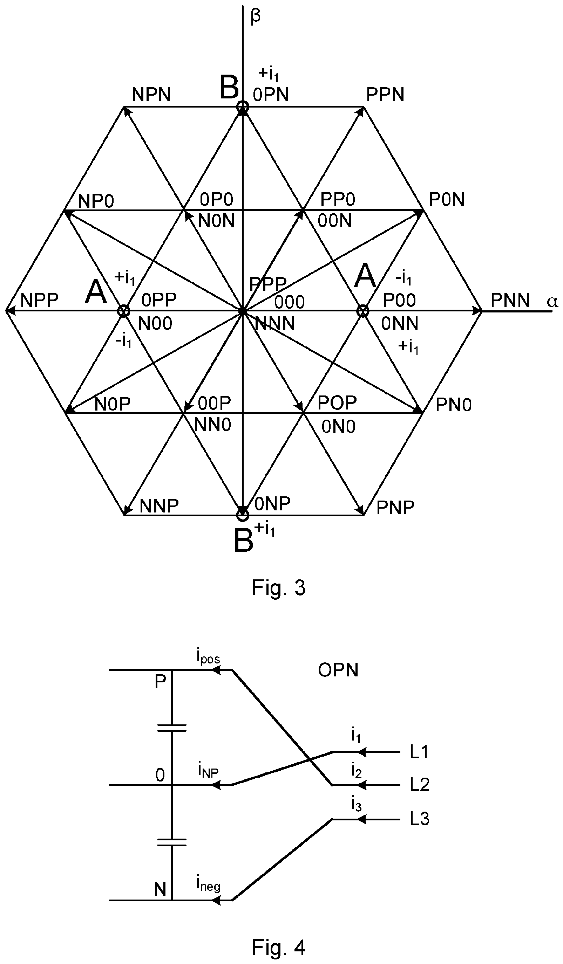

One way of illustrating the switching states is in the $\alpha\beta$-plane of the resulting AC output voltages $u_{L1}$, $u_{L2}$ and $u_{L3}$ of a 3L NPC converter 2 as in figure 3. Each vector in the $\alpha\beta$-plane represents a switching state labelled with three characters referring to the output voltage by P: Positive DC-link contact, 0: NP contact and N: Negative DC-link contact. Switching states that conduct the current of phase L1 to either part of the DC-link arrangement 6, i.e. where the NP current $i_{NP}$ is $\pm i_{L1}$, are marked with small circles. The states that conduct current of phase L2 and L3 to either part of the DC-link are rotated by 120° respectively (not specifically marked in the figure). Note that the switching states P00, N00, 0NN and 0PP (see A in the figure) align with the AC grid 3 current peak in active power mode $\varphi \approx 0$, whereas the switching states 0PN and 0NP (see B) align with the AC grid 3 current peak in reactive power mode $\varphi \approx \pm \pi/2$.

The rate of change of the NP voltage $u_{NP}$ is given by

$$u_{NP}(s) = \frac{i_{NP}(s)}{s \cdot C_{DC}} \qquad (2)$$

where s is a complex variable used for the Laplace transformation (an alternative formulation could be $du_{NP}/dt = 1/C_{DC} * i_{NP}$, where $C_{DC}$ refers to the capacitor of the DC links 6) and the NP current $i_{NP}$ is defined as

$$i_{NP} = i_{pos} - i_{neg} \qquad (3)$$

Table 1 lists the NP current as a function of the switching state. Figure 4 illustrates switching state oPN and the associated currents.

Table 1 NP current value for each switching state as a function of the 3p currents.

| Switching state | Neutral-point current ($i_{NP}$) |
|---|---|
| P00, N00 | $-i_1$ |
| 0NN, 0PP, 0PN, 0NP | $i_1$ |
| 0P0, 0N0 | $-i_2$ |
| N0N, P0P, P0N, N0P | $i_2$ |
| 00P, 00N | $-i_3$ |
| NN0, PP0, PN0, NP0 | $i_3$ |
| otherwise | 0 |

In accordance with the present invention, an indirect NPB (21) by means of a voltage harmonic injection (VHI) which may be especially useful in reactive power operation of the converter 2. In some embodiments, VHI can be combined with other methods, e.g. with indirect DC CM voltage injection which usually works best in active power operation of the converter and/or with the ASS method choosing between converter states with equivalent output voltage but different NP current. Two different (but optionally combinable) voltage harmonic injection methods are proposed:

- Second (2nd) harmonic injection.

- Sixth (6th) harmonic injection.

When using 2nd harmonic injection, a 2nd harmonic is injected to the modulation signal with the appropriate phase angle which shifts the application time of switching state vectors with opposing NP currents. Consequently, these opposing NP currents do not cancel out over time, which results in a DC NP current, charging or discharging the NP voltage.

When using 6$^{th}$ harmonic injection, a 6$^{th}$ harmonic is injected to the modulation signal with the appropriate phase angle which shifts the application time of vectors with opposing NP currents. The resulting DC NP current can be used to control the NP voltage. In contrast to the 2$^{nd}$ harmonic injection, the 6$^{th}$ harmonic injection does not generate output voltage distortion as it is a common mode voltage applied equally to all phases.

Figure 5 illustrates the NP control algorithm with combination logic 54 schematically shown. The complete NPB 21 may combine well-known methods 53 with the VHI method(s) 52. Depending on at least one controlling input of a measured system property / system state 55 (e.g. load angle φ, power S or any other control variable), one or the other method 52 or 53 is selected, or a weighted combination of both is formed to get optimal NP balancing for every load angle. The NPB controls the NP voltage $u_{NP}$ towards a predetermined reference voltage $u_{NP,ref}$ (typically 0 V), i.e. to minimize the NP voltage error 51. The system property may ideally be measured on the output voltages $u_{L1}$, $u_{L2}$, $u_{L3}$ between the converter 2 and the transformer, but a corresponding system property may also be obtained from the grid voltages $u_{G,L1}$, $u_{G,L2}$, $u_{G,}L_3$.

It is obvious to the one skilled in the art that the methods could also be combined into one method without explicit combination logic providing the same functionality. An example would be the combination of DC common mode voltage injection and voltage harmonic injection in one formula. Such implicit combinations shall be covered by the invention as well, if they physically make use of the original idea of applying VHI 52 and a complementary method.

Embodiments of the proposed invention were tested on a 3p-3p frequency converter 2 illustrated in figure 6. A back-to-back NPC converter arrangement 1 comprises first and second NPC converters 2a and 2b connected between first and second 3p grids 3a and 3b, having a communal DC side 4 arranged between the first and second converters. Respective transformer arrangements 60 are arranged between either of the AC grids 3a and 3b and the converter arrangement 1, each transformer arrangement having primary (grid-side) windings 62 and secondary (converter-side) windings 61. In the example of figure 6, the 12-pulse transformer topology on each 3p side consists of two NPC structures connected with series connection of transformer primaries on the converter-side of two 3p transformers as illustrated in figure 7. The NPB 21 is implemented as described herein. However, there is here a choice regarding on which side NPB should be active and that there are two NPC converters structures in each of the first and second converters 2a and 2b instead of just one as in figure 1. Symbols in figures 6 and 7 indicate which parts of the transformer arrangements 60 are connected in delta (Δ) or wye (Y, or star) topology.

A Voltage Limiting Unit (VLU) 63 may be connected in the DC side 4 for NPB 21 at very low power.

Figure 8 illustrates combination of different NPB methods by means of combination logic 54 comprising weighted combination 85 and a selector 86. Any of the known methods 53 of using a VLU 63, an Alternative Switching State (ASS) method 82 or a DC Common Mode (CM) harmonic injection method 83 can be used in combination with the VHI 52 for the NPB 21.

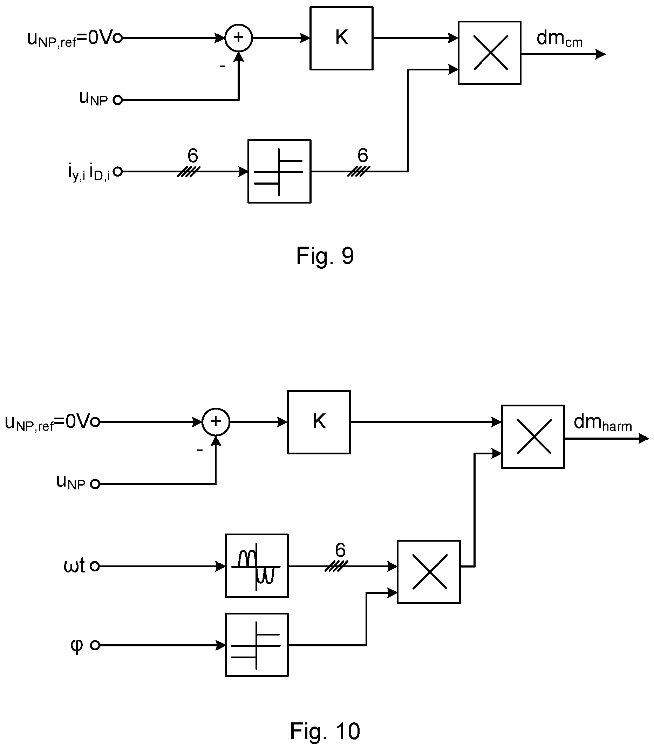

The NPB 21 by means of DC CM voltage injection 83 may be a proportional closed-loop feedback controller as illustrated in figure 9, which measures the NP voltage, compares it to the reference voltage $u_{NP,ref}$ (typically 0 v) and may e.g. multiply the voltage error 51 by a constant. The output of the DC CM control 83 may then be multiplied by the current sign to set the voltage offset depending on the current flow direction. Finally, dm is limited by a lower and upper bound.

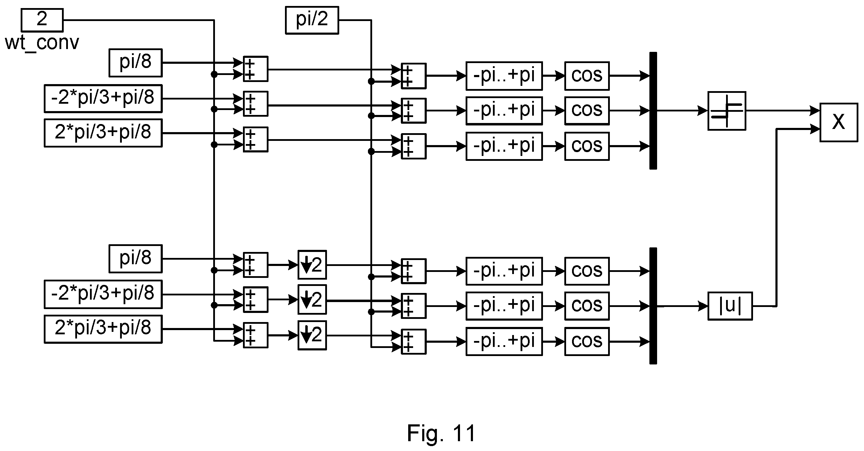

By contrast, the VHI method 52 may, as shown in figure 10, compare the NP voltage to the reference voltage $u_{NP,ref}$ (typically 0 v) and multiply the voltage error 51 by a constant. The output of the VHI method may then be multiplied by the output of the harmonic generator (see also figure 11) and load angle sign. Finally, dm is limited by a lower and upper bound.

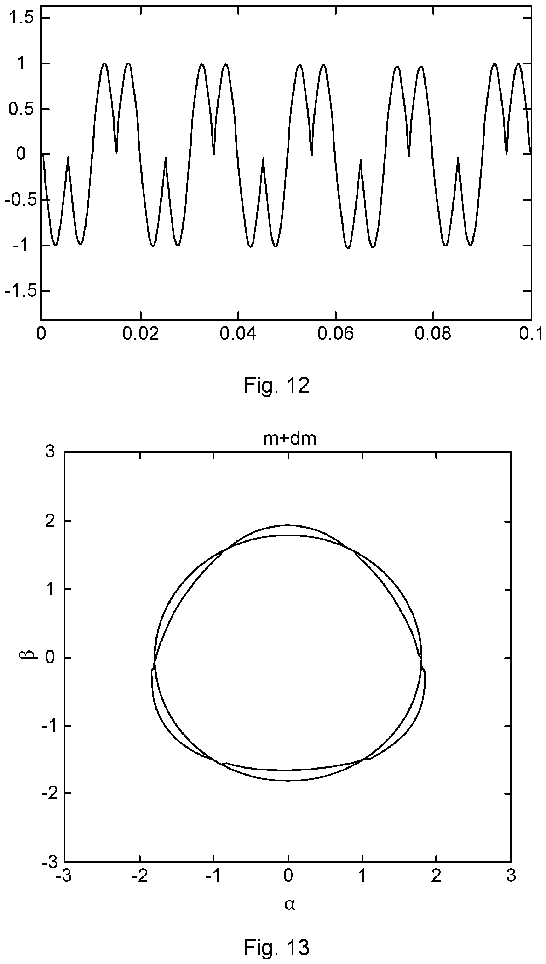

An example of a harmonic generator which was used is illustrated in figure 11. It generates a piece-wise sinusoidal signal, one phase of which is depicted in figure 12. It may have a frequency of half the nominal frequency $f_{nom}/2$ and the phase shift π/2.

With reference to figure 13, m is almost a constant signal, while one dimension of dm (6-dimensional) is described figure 12. The output of the modulator may thus be a 6-dimensional sinusoidal voltage where the amplitude is given roughly by m. The 6-dimensional output signals can be reduced to a 3-dimensional signal due to the 12-pulse connection (that would represent the 3p grid voltages). Furthermore, the 3-dimensional signal can be reduced to a 2-dimensional signal, because there is no ground involved. To make the latter conversion, the alpha-beta transformation may be used. To generate the graph of figure 13, the voltages were scaled down to 2 p.u. and the effect of dm was leveraged by artificially increasing it (to make it more distinct from the circle resulting from dm=o).

The graph of figure 13 thus illustrates the effect of the NP correction to the output voltage in reactive power mode.

In some embodiments, the combination logic 54 is arranged to weight the DC CM voltage injection method 83 and the VHI method 52 depending on the load angle φ. In active power operation φ≈0, the DC CM voltage injection may be prioritized. Similarly, the VHI may be prioritized in reactive power operation φ≈±π/2. The weights (w) may be chosen so that they add up to 1. They may e.g. be given by

$$w_{CM} = |\cos(\varphi t)| \qquad\qquad (4)$$

$$w_{VHI} = |\sin(\varphi t)| \qquad\qquad (5)$$

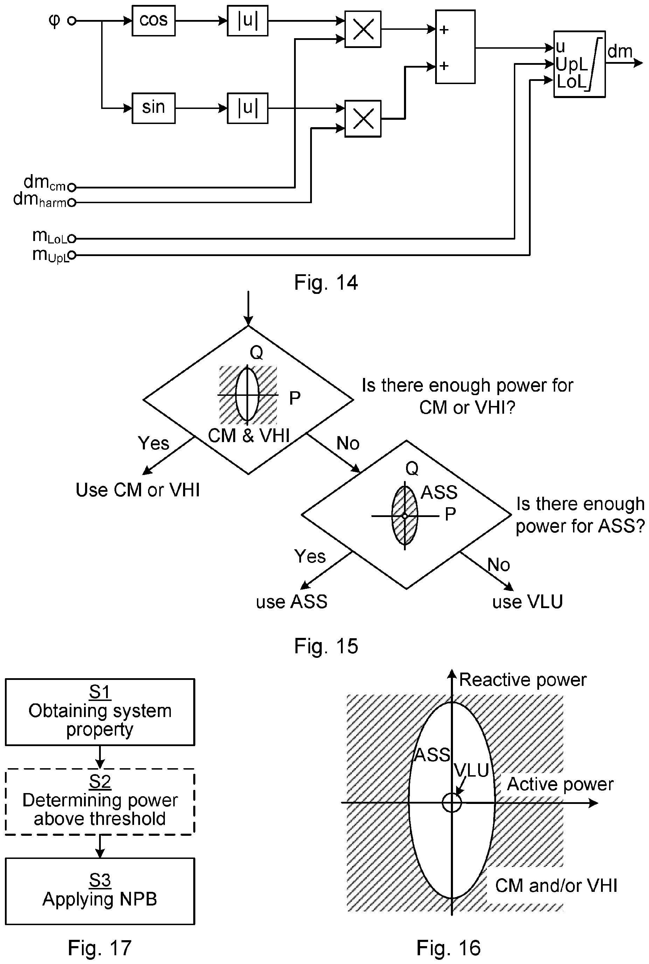

The output of the weighted sum may, as illustrated in figure 14, be subjected to a lower and upper bound to limit the distortion dm that is added to the output modulation.

The NPB selector 86 may be arranged to switch e.g. between the following NPB methods:

- A weighted combination of VHI 52 and DC CM voltage injection 83.

- ASS 82

- VLU 63

An example of the selection logic of the selector 86 is shown in figure 15. The CM voltage and VHI combination is selected in high power mode (if possible). Due to their linear behaviour, they enable an accurate and stable control of the NP voltage even when much current is flowing through the converter 2. This linearity property, however, only holds in certain operation modes and heavily depends on the actual modulator 23. For this example application, the linearity property is especially in reactive power (Q) mode more restricted at lower power, as illustrated in figure 16.

When the active (P) or reactive (Q) power is below a predetermined threshold (as illustrated by the ellipse in figures 15 and 16), the linearity of the CM voltage and VHI combination does not hold anymore. Then, the ASS method 82 may be selected. Finally, for very low currents, e.g. low power, the VLU 63 method may be chosen. Figure 17 is a schematic flow chart illustrating embodiments of the method of the present disclosure. A measured system property 55 is obtained Si. Then, NPB 21 is applied S3, based on the obtained Si system property, wherein the NPB 21 comprises a Voltage Harmonic Injection (VHI) control method 52 for injecting at least one voltage harmonic component to an output voltage $u_{L1}$, $u_{L2}$, $u_{L3}$ of the power converter to control the NP voltage $u_{NP}$ towards a reference NP voltage. Optionally, it is determined S2, based on the obtained Si system property, that the power S is above a predetermined power threshold before the applying $S_3$ of the NPB.

Embodiments of the present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product 12 which is a non-transitory storage medium or computer readable medium (media) having instructions 13 stored thereon/in, in the form of computer-executable components or software (SW), which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A method of controlling Neutral Point, NP, voltage ($u_{NP}$) of a power converter (2) having a three-level Direct Current, DC, link arrangement (6), the method comprising:

    obtaining (Si) a measured system property (55); and
    based on the obtained (Si) system property, applying (S3) Neutral Point Balancing, NPB, (21) comprising a Voltage Harmonic Injection, VHI, control method (52) for injecting at least one voltage harmonic component to an output voltage of the power converter to control the NP voltage ($u_{NP}$) towards a reference NP voltage.

2. The method of claim 1, wherein the at least one voltage harmonic component comprises a 2nd and/or 6th harmonic

component.

3. The method of any preceding claim, wherein the system property comprises a load angle ($\varphi$) of the output of the power converter (2).

4. The method of claim 3, wherein an angle at which the voltage harmonic component is to be injected is determined based on the obtained (Si) load angle ($\varphi$).

5. The method of any preceding claim, wherein the applying of the NPB also comprises another NPB control method, e.g. a DC CM voltage injection control method and/or an alternate switching state control method, preferably a DC CM voltage injection control method (83) for injecting a DC Common Mode, CM, voltage component to the output voltage.

6. The method of claim 5, wherein the NPB is dependent on a weighted combination (85) of the VHI control method (52) and the DC CM voltage injection control method (83).

7. The method of claim 6, wherein the weight of neither of the VHI and DC CM voltage injection control methods (52, 83) is zero.

8. The method of claim 6 or 7, wherein the VHI control method (52) is weighted higher during predominantly reactive power operation of the power converter (2) than during predominantly active power operation.

9. The method of claim 8, wherein the operation of the power converter (2) is determined to be predominantly reactive power operation when the load angle ($\varphi$) of the obtained (S1) system property (55) is above a predetermined first angle threshold.

10. The method of any claim 6-9, wherein the VHI control method (52) is weighted as the cosine function of the load angle ($\varphi$) of the obtained (Si) system property (55) and the DC CM voltage injection control method (83) is weighted as the sine function of the load angle ($\varphi$) of the obtained (Si) system property (55).

11. The method of any preceding claim, wherein the system property (55) comprises power (S) of the output of the power converter (2).

12. The method of claim 11, further comprising:
based on the obtained (Si) system property, determining (S2) that the power (S) is above a predetermined power threshold before the applying (S3) of the NPB.

13. A computer program product (12) comprising computer-executable components (13) for causing a converter controller (10) to perform the method of any preceding claim when the computer-executable components are run on processing circuitry (11) comprised in the converter controller.

14. A controller (10) for controlling Neutral Point, NP, voltage ($u_{NP}$) of a three-phase power converter (2) having a three-level Direct Current, DC, link arrangement (6), the controller comprising:

processing circuitry (11); and
data storage (12) storing instructions (13) executable by said processing circuitry whereby said controller (10) is operative to:

obtain a measured system property (55); and
based on the obtained system property, apply Neutral Point Balancing, NPB, comprising a Voltage Harmonic Injection, VHI, control method (52) for injecting at least one voltage harmonic component to an output voltage of the power converter (2) to control the NP voltage ($u_{NP}$) towards a reference NP voltage.

15. The power converter (2) comprising the controller (10) of claim 14.

Fig. 1

Fig. 2

Fig. 3

Fig. 4

**Fig. 5**

**Fig. 6**

Fig. 7

Fig. 8

$u_{NP,ref}=0V$

$u_{NP}$

$i_{y,i}\, i_{D,i}$

6

6

$dm_{cm}$

K

Fig. 9

$u_{NP,ref}=0V$

$u_{NP}$

$\omega t$

$\varphi$

6

$dm_{harm}$

K

Fig. 10

Fig. 11

Fig. 12

Fig. 13

Fig. 14

Is there enough power for CM or VHI?

Use CM or VHI

Is there enough power for ASS?

use ASS

use VLU

Fig. 15

**S1**
Obtaining system property

**S2**
Determining power above threshold

**S3**
Applying NPB

Fig. 17

Reactive power

Active power

ASS

VLU

CM and/or VHI

Fig. 16

Europäisches
Patentamt

European
Patent Office

Office européen
des brevets

# EUROPEAN SEARCH REPORT

**Application Number**

EP 19 21 5411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIE SHEN ET AL: "A Neutral-Point Balancing Controller for a Three-Level Inverter With Full Power-Factor Range and Low Distortion", IEEE TRANSACTIONS ON INDUSTRY APPLICATIONS, IEEE SERVICE CENTER, PISCATAWAY, NJ, US, vol. 49, no. 1, 1 January 2013 (2013-01-01), pages 138-148, XP011487559, ISSN: 0093-9994, DOI: 10.1109/TIA.2012.2228615 | 1,2,5-15 | INV. H02M7/487 |
| Y | * the whole document * | 3,4 | |
| Y | JP H07 79574 A (FUJI ELECTRIC CO LTD) 20 March 1995 (1995-03-20) * paragraph [0026] - paragraph [0036] * | 3,4 | |
| A | US 2015/008750 A1 (SHEN JIE [DE] ET AL) 8 January 2015 (2015-01-08) * the whole document * | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 18 June 2020 | van der Weiden, Ad |

## ANNEX TO THE EUROPEAN SEARCH REPORT
## ON EUROPEAN PATENT APPLICATION NO.

EP 19 21 5411

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2020

| Patent document cited in search report | | Publication date | Patent family member(s) | | Publication date |
|---|---|---|---|---|---|
| JP H0779574 | A | 20-03-1995 | JP 3186369 | B2 | 11-07-2001 |
| | | | JP H0779574 | A | 20-03-1995 |
| US 2015008750 | A1 | 08-01-2015 | BR 102014016439 | A2 | 08-12-2015 |
| | | | CA 2855310 | A1 | 03-01-2015 |
| | | | CN 104283432 | A | 14-01-2015 |
| | | | EP 2827490 | A1 | 21-01-2015 |
| | | | US 2015008750 | A1 | 08-01-2015 |

EPO FORM P0459

For more details about this annex : see Official Journal of the European Patent Office, No. 12/82